# EUROPÄISCHE PATENTANMELDUNG

(11) **EP 1 694 060 A1**
(43) Veröffentlichungstag der Anmeldung: **23.08.2006**
(21) Anmeldenummer: 05003458.6
(22) Anmeldetag: 17.02.2005
(51) Int. Cl.: H04N 5/44, H04N 13/00, G06Q 10/00

(54) **Präsentationssystem**

(71) Anmelder: Weitzdörfer, Wolf, 50674 Köln (DE)
(72) Erfinder: Weitzdörfer, Wolf, 50674 Köln (DE)
(74) Vertreter: Lehmann, Horst Michael

(57) **Zusammenfassung**

Es wird ein Präsentationssystem mit einem ersten Bildschirm zur Wiedergabe einer ersten Videosequenz und einem zweiten Bildschirm zur Wiedergabe einer zweiten Videosequenz beschrieben. Das Präsentationssystem umfasst eine Dekodiereinheit zur Dekodierung mindestens eines enkodierten Videodatenstroms und zum Erzeugen mindestens eines dekodierten Videodatenstroms, und eine Videoprozessoreinheit zum Extrahieren einer ersten Videosequenz mit einer Folge von ersten Einzelbildern und einer zweiten Videosequenz mit einer Folge von zweiten Einzelbildern aus dem mindestens einen dekodierten Videodatenstrom, und zum Erzeugen von ersten Videosignalen für den ersten Bildschirm und von zweiten Videosignalen für den zweiten Bildschirm. Die Videoprozessoreinheit ist dazu ausgelegt, die ersten Einzelbilder der ersten Videosequenz auf dem ersten Bildschirm bildweise synchron mit den zweiten Einzelbildern der zweiten Videosequenz auf dem zweiten Bildschirm wiederzugeben. Das Verhältnis von Aufnahmebildrate zu Wiedergabebildrate ist bei der zweiten Videosequenz höher als bei der ersten Videosequenz, wodurch die zweite Videosequenz gegenüber der ersten Videosequenz in Zeitlupe dargestellt wird.

## Beschreibung

Die Erfindung betrifft ein Präsentationssystem zur Wiedergabe von Videosequenzen auf zwei Bildschirmen, sowie die Verwendung eines Präsentationssystems zur Wiedergabe einer ersten Videosequenz auf dem ersten Bildschirm und einer zweiten Videosequenz auf dem zweiten Bildschirm. Des Weiteren betrifft die Erfindung ein Verfahren zur Wiedergabe von Videosequenzen auf zwei Bildschirmen.

Verfahren mit zwei unterschiedlichen Bildschirmen gibt es beispielsweise bei der Splitscreen-Werbung im Fernsehen, bei der zwei verschiedene Videosequenzen von einem Bildwiedergabegerät generiert werden, wobei ein Bildschirmfenster innerhalb eines zweiten Bildschirms angeordnet ist. Splitscreen-Werbung wird z.B. bei der Übertragung von Live-Veranstaltungen benutzt. Dabei wird der Fernsehschirm in zwei verschieden große Bildschirme gesplittet, die dem Fernsehzuschauer jeweils unterschiedliche Botschaften vermitteln. Auf der größeren der beiden Bildflächen wird dem Betrachter Werbung angeboten, während auf der zweiten kleineren Bildfläche die zu Gunsten der Werbung unterbrochenen Live-Geschehnisse zeitgleich weiter verfolgt werden können. Allerdings hat sich hier gezeigt, dass den Betrachter das Erfassen der Live-Geschehnisse auf dem kleinen zweiten Bildschirm unangemessen "anstrengt". Durch den Zwang zur parallelen Wahrnehmung von zwei unterschiedlichen Botschaften - einerseits Live-Geschehnisse und andererseits Werbung - entsteht das unbewusste Empfinden bei dem Betrachter, übermäßig beansprucht zu werden. Dieses Gefühl resultiert aus der hirnphysiologischen Gegebenheit, beim bewussten Denken nur mit einer Verarbeitungsgeschwindigkeit von 40 bis 60 Bytes in der Sekunde arbeiten zu können. Daraus erklärt sich, dass mehrere Gedanken bzw. Aspekte, die sich weder direkt oder indirekt ergänzen, nicht parallel, sondern ausschließlich seriell verarbeitet werden können. Weil aber vom Zuschauer diese parallele Informationsverarbeitung gefordert wird, wird dieses Splitscreen Verfahren als Störung empfunden. Dieser Prozess löst bei ihm eine unangenehme Befindlichkeit aus, die ihn auf andere Programme ausweichen lässt oder ihn sogar veranlasst, zur Erledigung sonstiger Aufgaben seinen Fernsehplatz zu verlassen. Damit hat die zu vermittelnde Botschaft ihren Adressaten verloren.

Ein weiteres, nach gleichem Prinzip arbeitendes Verfahren ist auch von verschiedenen TV-Nachrichtensendern bekannt, die durch das Einblenden von Unterzeilen ähnliche Konflikte für unsere Aufmerksamkeit auslösen.

Ferner ist eine Reihe von Verfahren bzw. Vorrichtungen bekannt, die sich die unterschiedlichen Eigenschaften der rechten und linken Gehirnhälfte eines Menschen zu Nutze machen. Die DE 93 93 401 C1 beschreibt eine Vorrichtung zur Verbesserung der Hirnhemisphärenkoordination. Mit der hierin offenbarten apparativen Vorrichtung soll die wechselseitige Koordination zwischen beiden Hirnhälften trainiert werden, um so geistige und manuelle Fähigkeiten zu vervollkommnen bzw. entsprechende Defizite zu beseitigen. Eine der vorgenannten ähnliche Vorrichtung wird in der US 6,443,977 offenbart.

Hierbei handelt es sich um eine Art Brille, die ein Patient zur Stimulierung der kortikalen Gehirnaktivität aufsetzt. Durch diese Brille kann beispielsweise die nicht so dominante Gehirnhälfte stimuliert werden, indem das mit dieser Gehirnhälfte verbundene Auge gezielten optischen Reizen ausgesetzt wird.

Eine weitere Gruppe von Verfahren bzw. Vorrichtungen beschäftigt sich damit, Gehirnwellen durch visuelle bzw. akustische Stimulation zu beeinflussen, um so einen Entspannungszustand hervorzurufen. Ein so hervorgerufener Entspannungszustand kann etwa wie in der US 4,315,502 dazu genutzt werden, Lerninhalte besser vermitteln zu können. Einen ähnlichen Zweck verfolgt die in der US 4,508,105 offenbarte Brille, deren "Brilengläser" mit Flüssigkristallflächen ausgestattet sind. Im deutschen Gebrauchsmuster DE 89 12 431 ist eine solche Vorrichtung in Form eines Helmes beansprucht.

Den vorgenannten Vorrichtungen bzw. Verfahren ist gemein, dass sich auf Grund der technischen Konzeption der vorgenannten Vorrichtungen bzw. Verfahren grundsätzlich immer nur ein einziger Nutzer der Systeme oder Methoden bedienen kann. Zudem muss der jeweilige Nutzer gezielt und aktiv in das Geschehen eingebunden sein, um die angekündigten Ergebnisse aus diesen Anwendungen zu ermöglichen.

Damit entfällt die Möglichkeit einer auch spontanen, zufälligen oder beiläufigen Nutzung, was aber in vielen Momenten des Lernens oder Informierens von entscheidender Bedeutung ist (Versammlungen mit Informationscharakter, Informationen im öffentlichen Raum, Kommunikation, etc.).

Es ist Aufgabe der Erfindung, eine Vorrichtung und ein Verfahren zu schaffen, das zu einer höheren Aktivierung der Aufmerksamkeit führt und dadurch eine leichtere Vermittlung von Informationen ermöglicht. Die Wahrnehmung und die Aufnahme von Informationen sollen verbessert werden.

Das erfindungsgemäße Präsentationssystem dient zur Wiedergabe von Videosequenzen auf zwei Bildschirmen. Das Präsentationssystem umfasst einen ersten Bildschirm zur Wiedergabe einer ersten Videosequenz und einen zweiten Bildschirm zur Wiedergabe einer zweiten Videosequenz sowie eine Dekodiereinheit zur Dekodierung mindestens eines enkodierten Videodatenstroms und zum Erzeugen mindestens eines dekodierten Videodatenstroms. Darüber hinaus umfasst das Präsentationssystem eine Videoprozessoreinheit zum Extrahieren einer ersten Videosequenz mit einer Folge von ersten Einzelbildern und einer zweiten Videosequenz mit einer Folge von zweiten Einzelbildern aus dem mindestens einen dekodierten Videodatenstrom, und zum Erzeugen von ersten Videosignalen für den ersten Bildschirm und von zweiten Videosignalen für den zweiten Bildschirm. Die Videoprozessoreinheit ist dazu ausgelegt, die ersten Einzelbilder der ersten Videosequenz auf dem ersten Bildschirm bildweise synchron mit den zweiten Einzelbildern der zweiten Videosequenz auf dem zweiten Bildschirm wiederzugeben. Dabei ist das Verhältnis von Aufnahmebildrate zur Wiedergabebildrate bei der zweiten Videosequenz höher als bei der ersten Videosequenz, wodurch die zweite Videosequenz gegenüber der ersten Videosequenz in Zeitlupe dargestellt wird.

Der dekodierte Videodatenstrom umfasst die Einzelbilder der ersten und der zweiten Videosequenz. Die Videoprozessoreinheit ist dafür zuständig, aus dem dekodierten Videodatenstrom die erste und die zweite Videosequenz zu extrahieren. Dadurch werden anders als beim vorbekannten Split-Screen-Verfahren die erste und die zweite Videosequenz in voller Auflösung erhalten. Durch diese Technik ermöglicht das erfindungsgemäße Präsentationssystem, die erste Videosequenz auf dem ersten Bildschirm und die zweite Videosequenz auf dem zweiten Bildschirm mit hoher Bildqualität darzustellen.

Die Videoprozessoreinheit ist dazu ausgelegt, die Einzelbilder der ersten Videosequenz bildweise mit den Einzelbildern der zweiten Videosequenz zu synchronisieren. Diese bildweise Synchronisation ist die Voraussetzung für einen exakten gemeinsamen Start sowie ein exaktes gemeinsames Ende der ersten und der zweiten Videosequenz, was wiederum eine synchrone Bildweiterschaltung erlaubt. Dadurch können die Bilder der ersten und der zweiten Videosequenz sehr genau auf einander abgestimmt werden.

Das Verhältnis von Aufnahmebildrate zur Wiedergabebildrate ist bei der zweiten Videosequenz höher als bei der ersten Videosequenz. Die zweite Videosequenz wird mit einer gegenüber der Aufnahmebildrate verringerten Wiedergabebildrate abgespielt. Dadurch werden die Bewegungsabläufe der zweiten Videosequenz im Vergleich zur ersten Videosequenz verlangsamt wiedergegeben. Es tritt ein Zeitlupeneffekt ein, was gleichbedeutend ist mit einem größeren Zeitfenster zur Verarbeitung der zweiten Videosequenz. Das ist notwendig, um mit der Geschwindigkeit unseres emotionalen Wahrnehmungsprozesses die zweiten Videosequenzen in ihrer Wirkung auch tatsächlich erfassen zu können. Unsere Emotionen sind in einem wesentlich komplexeren Netzwerk eingebettet als das Kognitive. Das macht den notwendigen zeitlichen Mehraufwand zu Gunsten einer qualifizierten Verarbeitung der zweiten Videosequenzen nachvollziehbar.

Dieser Prozess bewirkt zusammen mit der exakten Bild-Synchronisation und der individuellen hirnphysiologische Anpassung der Wiedergabegeschwindigkeit besonders der zweiten Videosequenzen eine angenehme und ausgewogene Balance beim Betrachter. Trotz unterschiedlicher Videosequenzen wird dem Betrachter damit ein nachhaltig leichteres Erfassen der angebotenen Bilder und Informationen ermöglicht. Ein Gefühl der Überforderung, die sich beim Betrachter beim Verfolgen zweier Videosequenzen einstellen könnte, wird durch die Verlangsamung der zweiten Videosequenz vermieden.

Bei dem erfindungsgemäßen Präsentationssystem wird dem Betrachter die Möglichkeit angeboten, mit seiner Wahrnehmung zwischen den beiden Videosequenzen hin und her zu wandern. Tritt bei der Betrachtung einer Videosequenz eine Informationsmüdigkeit auf, so wird er von seiner Neugier automatisch zu der zweiten Videosequenz geführt. Wie bei einem Loop wiederholt sich nun dieses Wechselspiel zwischen Informationsmüdigkeit und Neugier. Ein Hilfsmittel dabei ist, dass die Neugier des Betrachters bestrebt ist, einen Zusammenhang zwischen der ersten und der zweiten Videosequenz zu ergründen. Je gezielter auf dem zweiten Bildschirm über die zweiten Videosequenzen positive Emotionen des Betrachters angesprochen werden, desto intensiver wird bei dem Betrachter dieses Wechselspiel zwischen den Videosequenzen gefördert. Die Darstellung der zweiten Videosequenzen in der jeweils spezifischen Zeitlupe unterstützt und verstärkt diesen Prozess noch einmal wesentlich.

Werden auf dem ersten Bildschirm Informationsinhalte gezeigt, für die sich der Betrachter vielleicht primär nicht interessiert, dann wird sich der Betrachter vom ersten Bildschirm abwenden und sich dem zweiten Bildschirm zuwenden. Dies geschieht, wenn beispielsweise auf dem ersten Bildschirm Werbeclips oder Lerninhalte gezeigt werden, für die der Betrachter auf Grund seiner vorherigen Erfahrungen seine Aufmerksamkeit nicht zur Verfügung stellen will. Die Inhalte sind emotional negativ besetzt, was ihn zwangsläufig von dem Informationsangebot wegführt. Der Betrachter wendet sich vom ersten Bildschirm ab. Und weil unser Auge ständig nach Reizvollem sucht, wird sich die Wahrnehmung zwangsläufig unwillkürlich dem zweiten Bildschirm zuwenden. Die dort in Zeitlupe gezeigten zweiten Videosequenzen sprechen die Emotionen des Betrachters an. Diese zweiten Videosequenzen müssen so gewählt sein, dass zum Erfassen dieser komplexen Botschaften über die Zeitlupe genügend Zeit zur Verfügung gestellt wird. Dadurch wird eine ausgeglichene und damit positive Programmierung bei der Befindlichkeit des Betrachters erreicht. Wenn er sich nun aus Neugier um den Zusammenhang zwischen den beiden Videosequenzen bemüht, indem er sich - jetzt mit positiver emotionaler Tendenz - wieder der ersten Videosequenz zuwendet, wird er die Inhalte der ersten Videosequenz nunmehr entsprechend seiner positiven Einstimmung wahrnehmen.

Hirnphysiologischen Erkenntnissen zufolge wird die Aufnahmebereitschaft für dargebotene Informationen ganz wesentlich durch die "emotionale Einfärbung" der Informationen beeinflusst. Im Gehirn eines Betrachters sind Bilder und Situationen abgespeichert, mit denen der Betrachter bestimmte Emotionen verbindet. Durch ihre Ähnlichkeit mit diesen in der Vergangenheit abgespeicherten Bildern erzeugen die Bilder der zweiten Videosequenz wieder jenes verwandte Empfinden, das auf Grund seiner damaligen individuellen Relevanz zu einer Abspeicherung geführt hat. Im Zuge der Reaktivierung dieser Emotionen kommt es zu einer spontanen positiven Grundeinfärbung in der Wahrnehmung des Betrachters.

Grundsätzlich werden Informationen und Inhalte, die mit positiven Gefühlen verbunden sind, zum Bewusstsein verschaltet, wohingegen Inhalte, die mit negativen Gefühlen besetzt sind, nicht zum Bewusstsein des Betrachters vordringen. Den auf dem ersten Bildschirm gezeigten Inhalten ist ursprünglich wegen der negativen emotionalen Konnotation die Aufmerksamkeit des Betrachters versagt geblieben. Durch die verlangsamt wiedergegebene zweite Videosequenz kann die erforderliche positive emotionale Aufnahmebereitschaft geschaffen werden. Auf diese Weise finden die auf dem ersten Bildschirm dargestellten Informationsinhalte doch noch Zugang zum Bewusstsein des Betrachters.

Das vorliegende Präsentationssystem stellt insofern eine Technik zur Verbesserung der Wahrnehmung und der Aufnahmebereitschaft von Videosequenzen zur Verfügung. Dadurch haben die auf dem ersten Bildschirm gezeigten ersten Videosequenzen die Möglichkeit, zum Bewusstsein des Betrachters vorzudringen. Dabei ist die hohe Bildqualität und die exakte Synchronisation der ersten und der zweiten Videosequenz, wie sie durch das erfindungsgemäße Präsentationssystem geschaffen wird, für den erfindungsgemäßen Effekt einer Aufmerksamkeitssteigerung mit ursächlich.

Tests in verschiedenen Wartesituationen haben dem erfindungsgemäßen Präsentationssystem im Vergleich zum einfachen Bildschirm zum Beispiel bei Werbeclips eine Überlegenheit von 3:1 bestätigt.

Wenn man versucht, den aufmerksamkeitssteigernden Effekt beispielsweise mit Hilfe zweier Videorekorder zu erzielen, von denen einer in Zeitlupe betrieben wird, so wird man feststellen, dass sich die erfindungsgemäße aufmerksamkeitssteigernde Wirkung so nicht erzielen lässt. Ein hohes Maß an Synchronizität bei der Wiedergabe der ersten und der zweiten Videosequenz sowie eine überzeugende Bildqualität - beides Mal für das uns Unbewusste entscheidende Wahrnehmungsparameter - sind Voraussetzung für das Funktionieren der Erfindung.

Es ist von Vorteil, wenn die erste Videosequenz aus instruktiven ersten Bildern besteht, welche aufgrund ihrer logischen Struktur die einem Betrachter zu vermittelnden Informationen enthalten. Derartige Bildsequenzen wenden sich an die kognitiven Fähigkeiten des menschlichen Gehirns. Derartige erste Videosequenzen werden am besten erfasst, wenn sie mit normaler Geschwindigkeit wiedergegeben werden.

Es ist von Vorteil, wenn die zweite Videosequenz zweite Bilder mit rein assoziativer Wirkung zeigt, um bildhafte Verknüpfungen mit emotionalen Erinnerungen zu aktivieren. Die zweite, verlangsamt wiedergegebene Videosequenz soll primär die Emotionen des Betrachters ansprechen, um so einen emotional positiv aufgeladenen Kontext für die Aufnahme der Inhalte der ersten Videosequenz zu schaffen. Die Verlangsamung trägt der Tatsache Rechnung, dass emotionale Inhalte im Vergleich zu rationalen Inhalten vom Gehirn entsprechend ihrer deutlich größeren Komplexität in einem deutlich langsameren Zeitmass verarbeitet werden.

Gemäß einer vorteilhaften Ausführungsform der Erfindung gibt die zweite Videosequenz dargestellte Ereignisse gegenüber der natürlichen zeitlichen Abfolge verlangsamt in Zeitlupe wieder, wobei der Faktor, um den die zweite Videosequenz die dargestellten Ereignisse gegenüber der natürlichen Abfolge darstellt, zwischen 0,15 und 0,66 liegt.

Während Inhalte, die primär die logisch-kognitive Seite unserer Wahrnehmung ansprechen, in normaler Geschwindigkeit wiedergegeben werden können, sollten Filmsequenzen, die in erster Linie die Emotionen des Betrachters ansprechen, verlangsamt wiedergegeben werden. Dies ergibt sich aus der unterschiedlichen Verarbeitungsgeschwindigkeit von kognitiven und emotionalen Reizen durch das menschliche Gehirn. Beispielsweise werden Filmpassagen, die die Gefühle der Zuschauer ansprechen sollen, häufig in Zeitlupe und mit entsprechend getragenen Musikpassagen dargestellt. Bei einer späteren Rückerinnerung ist festzustellen, dass solche Passagen vorrangig im Langzeitgedächtnis abgespeichert werden.

Der Faktor, um den die zweite Videosequenz die dargestellten Ereignisse gegenüber der natürlichen Abfolge verlangsamt wiedergibt, sollte vorzugsweise zwischen 0,15 und 0,66 liegen. Eine derartige Verlangsamung der zweiten Videosequenz wird vom Betrachter als harmonisch und ansprechend empfunden. Wenn der Faktor unterhalb von 0,15 liegt, wird die zweite Videosequenz als zu langsam empfunden. Wenn der Faktor dagegen zwischen 0,66 und 1 liegt, empfindet der Betrachter die Gesamtheit der Darstellung auf dem ersten und zweiten Bildschirm als zu unruhig und als störend. Die Verbesserung der Aufnahmefähigkeit beim Betrachter hängt daher ganz wesentlich vom Verhältnis der Wiedergabegeschwindigkeiten der ersten und der zweiten Videosequenz ab.

Entsprechend einer vorteilhaften Ausführungsform kann der Verlangsamungsfaktor insbesondere um 0,4 liegen. Der Faktor, um den die zweite Videosequenz die dargestellten Ereignisse gegenüber der natürlichen Abfolge verlangsamt, soll bei geringen Bewegungsabläufen (z. B. Wolken) mit einem höheren Wert, bei höheren Bewegungsabläufen (z. B. Regen) mit einem niedrigeren Wert dargestellt werden.

Es ist von Vorteil, wenn die zweite Videosequenz mit einer gegenüber der Wiedergabebildrate erhöhten Aufnahmebildrate aufgezeichnet wurde, wodurch die Wiedergabe der zweiten Videosequenz auf dem zweiten Bildschirm verlangsamt in Zeitlupe erfolgt. Die zweite Videosequenz, deren Aufgabe die positive Beeinflussung der Emotionen des Betrachters ist, sollte mit einer erhöhten Aufnahmebildrate aufgezeichnet werden, um später bei verlangsamter Wiedergabe ausreichend viele Bilder pro Sekunde zur Verfügung zu haben. Auf diese Weise kann bei verlangsamter Wiedergabe der zweiten Videosequenz eine übereinstimmende Qualität der ersten und der zweiten Videosequenz erzielt werden.

Vorzugsweise wird die zweite Videosequenz mit einer um den Faktor 1,5 bis 6,66 höheren Aufnahmebildrate aufgezeichnet als die erste Videosequenz, wodurch sich bei bildsynchroner Wiedergabe der ersten und der zweiten Videosequenz eine gegenüber der ersten Videosequenz auf das 0,15-fache bis 0,66-fache verlangsamte Wiedergabe der zweiten Videosequenz ergibt.

Gemäß einer weiteren vorteilhaften Ausführungsform der Erfindung ist die Aufnahmebildrate, mit der die Einzelbilder der ersten Videosequenz aufgezeichnet wurden, gleich zur Wiedergabebildrate der ersten Videosequenz, während die Aufnahmebildrate, mit der die Einzelbilder der zweiten Videosequenz aufgezeichnet wurden, höher ist als die Wiedergabebildrate der zweiten Videosequenz. Vorzugsweise umfasst die erste Videosequenz Inhalte, die sich an die logischrationale Seite der Wahrnehmung richten. Derartige Inhalte können der hirnphysiologischen Verarbeitung mit normaler Verarbeitungsgeschwindigkeit angeboten werden.

Vorzugsweise handelt es sich bei der Dekodiereinheit um eine MPEG2-Dekodiereinheit, welche dazu ausgelegt ist, einen enkodierten MPEG2-Datenstrom in einen dekodierten Videodatenstrom umzuwandeln. Der Standard MPEG2 bietet die Möglichkeit, Bilder von einer oder mehreren Videosequenzen in einem gemeinsamen MPEG2-Datenstrom zu enkodieren. Darüber hinaus stellt der Standard MPEG2 leistungsfähige Kompressionsalgorithmen für Videosequenzen zur Verfügung, so dass die erhaltenen enkodierten Datenströme auch bei längeren Videoclips hinreichend klein sind, um über DSL oder Satellit übertragen werden zu können.

Gemäß einer weiteren vorteilhaften Ausführungsform umfasst die Videoprozessoreinheit einen Zweifach-Videoprozessor zum Extrahieren der ersten und der zweiten Videosequenz aus dem dekodierten Videodatenstrom, einen ersten Graphikprozessor, der die erste Videosequenz in erste Videosignale zur Ansteuerung des ersten Bildschirms umwandelt, sowie einen zweiten Graphikprozessor, der die zweite Videosequenz in zweite Videosignale zur Ansteuerung des zweiten Bildschirms umwandelt. Aus dem dekodierten Videodatenstrom werden zwei Videosequenzen in voller Auflösung extrahiert, welche dann separaten Graphikprozessoren zugeführt werden, um so die zur Ansteuerung der Bildschirme benötigten Videosignale zu erzeugen. Anders als beim vorbekannten Split-Screen-Verfahren, bei dem die Aufspaltung eines Videosignals in zwei oder mehr Teilsignale zu einem merklichen Qualitätsverlust in jedem der Teilbildschirme führt, können beim erfindungsgemäßen Präsentationssystem die erste Videosequenz auf dem ersten Bildschirm und die zweite Videosequenz auf dem zweiten Bildschirm in voller Bildqualität wiedergegeben werden.

Es ist von Vorteil, wenn der Videoprozessoreinheit ein Synchronisationssignal zugeführt wird, welches eine bildsynchrone Wiedergabe der Einzelbilder der ersten und der zweiten Videosequenz bewirkt. Dadurch wird ein absolut synchrones, bildgenaues Abspielen von zwei unterschiedlichen MPEG2-Bitstreams ermöglicht. Die synchrone Abspielgenauigkeit kann dabei kleiner als 64 µs sein.

Es ist von Vorteil, wenn das Präsentationssystem eine Dämpfungseinheit für ein Synchronisationssignal umfasst. Bei dem synchronen Abspielen von beispielsweise zwei MPEG2-Bitstreams treten aufgrund der sehr steilen Flanken im Sync-Bereich der Videosignale Übersprechfehler auf, die auf den Bildschirmen als feine vertikale Streifen deutlich sichtbar wären. Durch optimierte Dämpfung des Synchronisationssignals können Störungen im wiedergegebenen Bild unterdrückt werden. Beispielsweise wurde in einer Versuchsreihe eine optimale Dimensionierung eines R/C-Glieds ermittelt, das für das Synchronisationssignal den Stromfluss über das Videokabel bei gleichzeitiger Verringerung der Flankensteilheit minimiert.

Gemäß einer weiteren vorteilhaften Ausführungsform der Erfindung weisen die Einzelbilder der ersten und der zweiten Videosequenz einander entsprechende Zeitkodes auf, wobei die Videoprozessoreinheit dazu ausgelegt ist, anhand dieser Zeitkodes die erste Videosequenz und die zweite Videosequenz zu synchronisieren. Die Synchronisation der ersten und der zweiten Videosequenz erfolgt über für beide Signalbestandteile identische Zeitkodes, die in den jeweiligen Signalbestandteilen bei der Enkodierung hinterlegt werden. Diese Zeitkodes können einen beliebigen Startwert haben, dieser muss jedoch für die beiden Signalbestandteile identisch sein.

Gemäß einer weiteren vorteilhaften Ausführungsform der Erfindung ist die Videoprozessoreinheit dazu ausgelegt, die Wiedergabe der ersten Videosequenz und die Wiedergabe der zweiten Videosequenz dergestalt zu synchronisieren, dass die Wiedergabe im Wesentlichen zeitgleich beginnt und endet, wobei die Zeitpunkte des Wiedergabebeginns bzw. des Wiedergabeendes der Videosequenzen zeitlich jeweils weniger als 40 ms, vorzugsweise weniger als 33 ms auseinanderliegen. Wichtig für die Funktionsweise des Präsentationssystems ist, dass die Wiedergabe der ersten Videosequenz und der zweiten Videosequenz synchron beginnt und endet. Da minimale Bildlaufdifferenzen nur von unserem Unterbewussten wahrgenommen werden, können Präferenzen entstehen, die zwar dem Bewusstsein verborgen bleiben, aber über das Unterbewusste Einfluss auf die Verarbeitung der Informationen im Gehirn des Betrachters haben. Daher sollte die Differenz in der Synchronizität der ersten Videosequenz zur zweiten Videosequenz für eine gute Wirkung des Verfahrens weniger als 33 ms betragen.

Vorzugsweise ist der erste Bildschirm neben dem zweiten Bildschirm angeordnet. Es hat sich herausgestellt, dass zwei nebeneinander angeordnete Bildschirme für den Betrachter einfacher zu erfassen sind als beispielsweise übereinander angeordnete Bildschirme. Bei übereinander angeordneten Bildschirmen wird die Verarbeitung der Informationsinhalte im Gehirn offensichtlich derart kompliziert, dass die Wahrnehmung der dargestellten Inhalte vom Betrachter als anstrengend empfunden wird.

Insbesondere ist es von Vorteil, wenn der erste Bildschirm rechts von dem zweiten Bildschirm angeordnet ist. Vom Auge aus linker Hand orientierte Wahrnehmungen werden primär erst einmal der rechten Hirnhälfte angeboten, während vom Auge aus rechter Hand orientierte Wahrnehmungen primär erst einmal der linken Hirnhälfte angeboten werden. Da die linke Gehirnhemisphäre unter anderem für die Verarbeitung logisch-kognitiver Informationen verantwortlich ist, bietet es sich an, für die linke Gehirnhälfte bestimmte Informationsinhalte auf dem rechts angeordneten ersten Bildschirm zu zeigen. Analog-sensorische Reize werden dagegen vorzugsweise von der rechten Hirnhemisphäre aufgenommen. Daher sollten Bildsequenzen, die in erster Linie die Emotionen ansprechen, auf dem links angeordneten zweiten Bildschirm wiedergegeben werden.

Es ist von Vorteil, wenn der erste und der zweite Bildschirm so nebeneinander angeordnet sind, dass sie sich zusammen im Blickwinkelbereich eines Betrachters befinden und von mehreren Betrachtern gleichzeitig betrachtet werden können. Mit Blickwinkelbereich ist dabei der Bereich der visuellen Wahrnehmung eines Menschen gemeint, innerhalb dessen ein auftretender visueller Reiz geeignet ist, die Aufmerksamkeit des Betrachters auf sich zu ziehen.

Es ist von Vorteil, wenn der erste Bildschirm und der zweite Bildschirm die gleiche Größe aufweisen. So wird sichergestellt, dass die beiden Bildschirme für den Betrachter und dessen Wahrnehmung gleichrangig sind und keine visuelle Rangfolge der beiden Bildschirme entsteht. Eine solche Rangfolge wäre kontraproduktiv, denn sie würde den Betrachter dazu veranlassen, sich primär der visuell hervorgehobenen Bildfläche zuzuwenden. Um eine optimal aufmerksamkeitssteigernde Wirkung des erfindungsgemäßen Präsentationssystems zu erzielen, sollte die Neigung des Betrachters, sich dem ersten oder dem zweiten Bildschirm zuzuwenden, lediglich von der Relevanz der dargestellten Bildsequenzen abhängen.

Gemäß einer vorteilhaften Ausführungsform sind der erste Bildschirm und der zweite Bildschirm rechteckig, wobei das Seitenverhältnis von Breitseite zur Hochseite der Bildschirme 4:3 oder 16:9 entspricht. Es ist eine wahrnehmungsspezifische Gegebenheit beim Menschen, die Außenwelt visuell querformatig aufzunehmen. Der Mensch nimmt daher ein breitformatiges Bild gemäß seiner Sehgewohnheit besser und leichter wahr als ein Bild im hochformatigen Zuschnitt. Beispielsweise ist die Rückerinnerung an querformatige Werbeformate wesentlich häufiger als an hochformatige. Daher ist es von Vorteil, wenn sowohl beim ersten als auch beim zweiten Bildschirm das Verhältnis von Breitseite zu Hochseite größer als 1 ist. Darüber hinaus sollte aber auch die vom ersten und vom zweiten Bildschirm gebildete Gesamtheit eine querformatige optische Gesamtheit sein. Dies kann dadurch erreicht werden, dass die beiden Bildschirme nebeneinander auf gleicher Höhe angeordnet sind.

Es ist von Vorteil, wenn der erste Bildschirm und der zweite Bildschirm eine Flächendiagonale von mindestens 17 Zoll, vorzugsweise von 50 bis 70 Zoll aufweisen. Dabei richtet sich die Größe nach dem Abstand des Betrachters zu den zu vermittelnden Informationen auf den Bildschirmen. Im privaten Bereich hat es sich als zweckmäßig erwiesen, wenn die Bildschirme eine Flächendiagonale von jeweils mindestens 17 Zoll aufweisen. Im öffentlichen Bereich muss die Flächendiagonale größer sein und liegt vorzugsweise zwischen 50 und 70 Zoll.

Dabei ist unter dem Begriff Bildschirm jede Art von bildwiedergebender Fläche zu verstehen, die Videosequenzen wiederzugeben vermag. Ein Bildschirm kann also insbesondere die Bildwiedergabefläche eines Röhren-, eines Flüssigkristall- oder eines Plasmabildschirms sein. Ebenso ist unter dem Begriff Bildschirm aber eine bildwiedergebende Projektionsfläche eines Videobeamers, eines Diaprojektors oder eines Filmprojektors zu subsumieren. Vorzugsweise handelt es sich bei dem ersten und dem zweiten Bildschirm um Flachbildschirme.

Gemäß einer vorteilhaften Ausführungsform der Erfindung überlappen der erste Bildschirm und der zweite Bildschirm einander nicht. Darüber hinaus sollten der erste Bildschirm und der zweite Bildschirm einander nicht umgeben. Des Weiteren ist es von Vorteil, wenn zwischen dem ersten und dem zweiten Bildschirm ein nicht bildgebender, neutraler Trennbereich angeordnet ist. Dieser neutrale Trennbereich kann beispielsweise von nicht bildwiedergebenden Randbereichen oder Rahmenelementen der Bildwiedergabegeräte gebildet werden. Alternativ oder zusätzlich kann zwischen den Bildwiedergabegeräten ein Zwischenraum vorgesehen sein. Durch all diese Maßnahmen wird erreicht, dass die beiden Bildschirme als zwei klar voneinander getrennte, eigenständige Bildflächen wahrgenommen werden.

Der erfindungsgemäße Effekt einer Steigerung der Aufmerksamkeit des Betrachters lässt sich dann erzielen, wenn die beiden Bildschirme als zwei unterschiedliche, physisch eigenständige Einheiten wahrgenommen werden. Die auf dem ersten Bildschirm wiedergegebene erste Videosequenz, welche die dem Betrachter zu vermittelnden Informationen, beispielsweise Lerninhalte oder Werbebotschaften enthält, würde für sich genommen vom Betrachter mangels emotionaler Relevanz abgelehnt werden. Durch diese gefühlsmäßig negative Besetzung der auf dem ersten Bildschirm wiedergegebenen Inhalte würden diese vom Betrachter abgeblockt und kämen nicht in den Genuss von ausreichender Aufmerksamkeit. Würden die beiden Bildschirme dem Betrachter als eine Einheit erscheinen, so würde sich diese Ablehnung der auf dem ersten Bildschirm wiedergegebenen Inhalte auch auf den zweiten Bildschirm erstrecken, selbst wenn dieser positiv besetzte Inhalte zeigen würde. Die optische Eigenständigkeit des zweiten Bildschirms kann daher verhindern, dass beide Bildschirme als Ganzes abgelehnt werden. Nur durch die Wahrnehmung der Bildschirme als zwei unterschiedliche, physisch eigenständige Einheiten durch den Betrachter ist gewährleistet, dass dieser, wenn er sich von Informationen, die ihm über die erste Videosequenz und somit vom ersten Bildschirm als Transporteur angeboten werden, abwendet, sich nicht auch vom zweiten Bildschirm und der zweiten Videosequenz abwendet. Nur so kann erreicht werden, dass die emotional positiv besetzten Inhalte, die auf dem zweiten Bildschirm wiedergegeben werden, eine Steigerung der Aufmerksamkeit für die auf dem ersten Bildschirm wiedergegebenen Inhalte bewirkt.

Es ist von Vorteil, wenn die Bildschirme nebeneinander und auf gleicher Höhe angeordnet sind und der neutrale Trennbereich vertikal zwischen den Bildschirmen verläuft. Des Weiteren ist es von Vorteil, wenn der durch den neutralen Trennbereich zwischen dem ersten Bildschirm und dem zweiten Bildschirm gebildete Abstand etwa 1/50 bis 1/2 des Abstands der Mittelpunkte der beiden Bildschirme voneinander beträgt. So ist gewährleistet, dass der Betrachter die beiden Bildschirme als Gesamtheit, nicht aber als Einheit wahrnimmt.

Gemäß einer weiteren vorteilhaften Ausführungsform sind der erste Bildschirm und der zweite Bildschirm derart angeordnet, dass sie von einem neutralen Umgebungsbereich umgeben sind, wobei der Umgebungsbereich die Bildschirme zu allen Seiten hin vorzugsweise um mindestens die Hälfte der Breite der Bildschirme überragt. Ein solcher neutraler Umgebungsbereich um die beiden Bildschirme herum bewirkt unter anderem, dass der Betrachter nicht von möglichen weiteren optischen Reizen in seinem Blickfeld abgelenkt wird, wodurch die Wahrnehmung der Videosequenzen gestört würde.

Entsprechend einer weiteren vorteilhaften Ausführungsform der Erfindung erfolgt die Wiedergabe der zweiten Videosequenz und/oder die der ersten Videosequenz ohne Tonwiedergabe. Das Fehlen akustischer Reize führt insbesondere dazu, dass der Betrachter nicht von dem eigentlichen visuellen Inhalt der zu vermittelnden Information abgelenkt wird. So wird vermieden, dass der Betrachter diese akustischen Reize primär einem der beiden Bildschirme zuordnet, sich dadurch bewusst oder unbewusst vorrangig diesem zuwendet und deshalb keine Gleichrangigkeit der Bildschirme mehr besteht.

Es ist von Vorteil, wenn die Wiedergabe der zweiten Videosequenz und die der ersten Videosequenz im gleichen Farbspektrum erfolgt. Wenn die erste Videosequenz in Schwarz/Weiß wiedergegeben wird, erfolgt also auch die Wiedergabe der zweiten Videosequenz in Schwarz/Weiß. Erfolgt die Wiedergabe der ersten Videosequenz in einem Farbspektrum von 24 Bit, so hat auch die Wiedergabe der zweiten Videosequenz vorzugsweise im gleichen Farbspektrum zu erfolgen.

Nachfolgend wird die Erfindung anhand mehrerer in der Zeichnung dargestellter Ausführungsbeispiele weiter beschrieben. Es zeigen:
Fig. 1 eine Anordnung des ersten und des zweiten Bildschirms;
Fig. 2 ein Blockschaltbild des erfindungsgemäßen Präsentationssystems;
Fig. 3 eine Darstellung eines bevorzugten Geschwindigkeitsbereichs für die Wiedergabe der zweiten Videosequenz;
Fig. 4 eine Darstellung der für die Verarbeitung von Emotionen zuständigen Bereiche des menschlichen Gehirns; und
Fig. 5 eine schematische Darstellung der Verarbeitung der ersten und der zweiten Videosequenz.

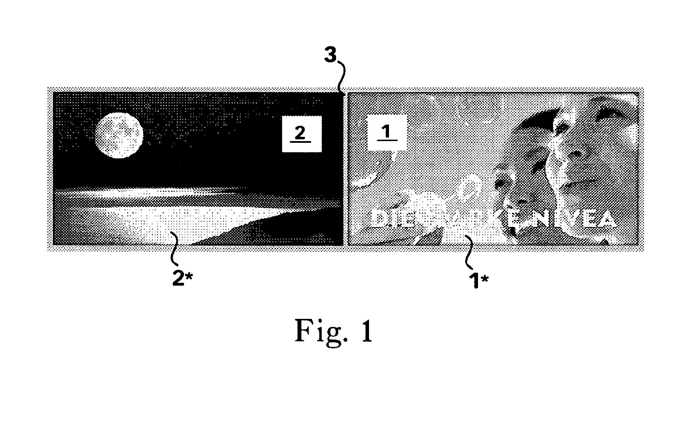

Fig. 1 zeigt die beiden nebeneinander angeordneten Bildschirme 1, 2 des erfindungsgemäßen Präsentationssystems. Zwischen den Bildschirmen 1 und 2 befindet sich ein neutraler Trennbereich 3. Um die Bildschirme 1, 2 herum kann ein neutraler Umgebungsbereich angeordnet sein. Auf dem rechts angeordneten Bildschirm 1 werden informative erste Videosequenzen 1* gezeigt, deren Inhalte die kognitiv-logische Seite des Betrachters ansprechen. Falls das erfindungsgemäße Präsentationssystem für Werbezwecke eingesetzt wird, wird der rechte Bildschirm 1 zur Wiedergabe von Werbeclips eingesetzt. Wenn das Präsentationssystem zur Vermittlung von Lerninhalten verwendet wird, werden auf dem rechten Bildschirm 1 die zu vermittelnden Lerninhalte gezeigt.

Es ist bekannt, dass nur ein Bruchteil der visuellen Reize Zugang zum Bewusstsein des Betrachters erhält. Der weitaus überwiegende Teil der visuellen Informationen - man geht von über 90% aus - gelangt nicht zum Bewusstsein des Betrachters. Die Erkenntnisse der Hirnforschung haben ergeben, dass die Auswahl der relevanten Informationen und das Ausblenden der irrelevanten Informationen anhand der emotionalen Relevanz der Informationen vorgenommen werden. Emotional negativ besetzte Inhalte werden ausgeblendet und gelangen nicht zum Bewusstsein des Betrachters. Nur emotional positiv besetzte Inhalte können zum Bewusstsein und eventuell auch in das Langzeitgedächtnis des Betrachters vordringen, wo sie als bleibende Erinnerungen verankert werden.

Die auf dem rechten Bildschirm 1 gezeigten Werbebotschaften und Lerninhalte sind häufig emotional negativ besetzt. Gerade die Überflutung mit Werbeclips hat dazu geführt, dass ein Betrachter derartige Werbebotschaften als unerwünscht und störend empfindet. Wegen dieser "negativen Einfärbung" haben derartige Inhalte kaum eine Chance, zum Bewusstsein des Betrachters vorzudringen.

Bei dem erfindungsgemäßen Präsentationssystem werden auf dem linken Bildschirm 2 zweite Videosequenzen 2* mit rein assoziativer Wirkung wiedergegeben, um bildhafte Verknüpfungen mit emotionalen Erinnerungen zu aktivieren, ohne dabei einen logischen Zusammenhang zu der zu vermittelnden Information auf dem ersten Bildschirm 1 herzustellen. Die auf dem linken Bildschirm 2 gezeigten zweiten Videosequenzen 2* sind dazu geeignet, die Emotionen des Betrachters anzusprechen. Beispielsweise könnten Naturaufnahmen, Landschaften, Wolken, Regen, Kaminfeuer, Kerzenlicht auf dem linken Bildschirm 2 gezeigt werden. Es ist bekannt, dass verlangsamt wiedergegebene Filmsequenzen sich in besonderer Weise dazu eignen, die Gefühle des Betrachters anzusprechen. Beispielsweise werden Filmepassagen, in denen sich ein Regisseur um die Emotionen der Zuschauer bemüht, in Zeitlupe und mit entsprechend getragenen Musikpassagen dargestellt. Bei einer späteren Rückerinnerung ist festzustellen, dass solche Passagen vorrangig im Langzeitgedächtnis abgespeichert sind. Insofern wird die auf dem linken Bildschirm 2 wiedergegebene zweite Videosequenz 2* vorzugsweise in Zeitlupe dargestellt, um so die positive emotionalen Wirkung weiter zu steigern.

Nimmt der Betrachter die Information auf der Bildfläche 1 wahr, so wird er sich von dieser abwenden, sobald er feststellt, dass die dort abgebildeten Informationen auf Grund früherer Erfahrung für ihn keine emotionale Relevanz haben. Entsprechend dieser Erinnerung wird die Information wegen mangelhafter individueller Emotionalität durch einen hirnphysiologischen Prozess bei dem Betrachter negativ "eingefärbt". Diese negative Programmierung verhindert eine weitere Verschaltung mit den restlichen sensorischen Informationen, was zu einem Verwerfen der Botschaft wegen unzureichender emotionaler Relevanz führt.

In dem Moment, in dem sich der Betrachter von dem Bildschirm 1 abwendet, ist seine Wahrnehmung sofort wieder auf der Suche nach Interessantem. Wörtlich als auch bildlich sind hier die Videosequenzen 2* des Bildschirms 2 naheliegend, wobei die physische Eigenständigkeit der Bildschirme 1, 2 es der Wahrnehmung erheblich erleichtert, sich von Bildschirm 1 abzuwenden, um sich mit den Videosequenzen 2* auf dem Bildschirm 2 zu beschäftigen. Die Videosequenzen 2* stehen mit den Informationen der Videosequenzen 1* in keinerlei inhaltlichem Sachzusammenhang, sondern dienen lediglich dazu, beim Betrachter eine emotional positive Aufnahmebereitschaft für die Inhalte der Videosequenz 1* zu wecken.

Die zuvor beschriebene unterbewusste Prüfungsprozedur für die ersten Videosequenzen 1* wird nun ebenfalls für die zweiten Videosequenzen 2* vorgenommen. Diese zweite Videosequenz 2* wird jedoch vom Betrachter als beruhigend und angenehm empfunden. Die auf dem linken Bildschirm 2 verlangsamt wiedergegebenen Landschaften, Wolken, Regen, Kaminfeuer, Kerzenlicht wirken auf den Betrachter entspannend.

Um hier im Sinne der Erfindung mit Hilfe der Videosequenzen 2* ein hohes Aktivierungsniveau von positiven Emotionen zu bekommen, spielen archetypische Grundmuster eine wichtige Rolle. Darunter versteht man kollektive abstrakte emotionale Zustände, die unabhängig von der persönlichen genetischen Veranlagung über Jahrtausende als "Grundsubstanz" grundsätzlich jedem vererbt werden. Sie werden in tieferen Bewusstseinsschichten abgespeichert und sind damit für unser Bewusstsein nur über die Aktivierung von Bildern mit entsprechend assoziativem Charakter zugänglich.

Die emotional aufgeladenen Videosequenzen 2* dienen bei der hier beschriebenen Anwendung ausschließlich dazu, im Sinne der Erfindung die persönliche Befindlichkeit möglichst optimal positiv aufzuladen. Als Folge stellt sich eine positive Reaktion auf die Videosequenzen 2* ein. In dieser positiven Befindlichkeit beginnt nun der Betrachter, das gesamte Arrangement zwischen den Videosequenzen 1* und Videosequenzen 2* begreifen zu wollen.

Mit Hilfe der Verhaltensmuster Neugier - sie besteht aus kognitiven und emotionalen bzw. motivierenden Anteilen - und Kreativität - die Fähigkeit, produktiv gegen Regeln zu denken und zu handeln - versucht nun der Betrachter durch einen Abgleich mit den ursprünglich abgelehnten Videosequenzen 1* einen Zusammenhang herzustellen. Das jetzt einsetzende visuelle Wandern zwischen den ersten Videosequenzen 1 * und den zweiten Videosequenzen 2* bzw. zwischen den entsprechenden Bildschirmen 1,2 - die Neugier will nichts verpassen und die Kreativität will um die Beziehung zwischen Videosequenzen 1* und Videosequenzen 2* wissen - dient dem besseren Begreifen des gesamten Arrangements aus dem ersten Bildschirm 1 und dem zweiten Bildschirm 2. Als Folge dieses Prozesses verliert die erste Videosequenz 1* mehr und mehr ihre negative emotionale Einfärbung, weil sie unmittelbar von der starken positiv-emotionalen Aufladung durch die zweite Videosequenz 2* profitiert. Dadurch ist es möglich, dass die zunächst vom Betrachter abgelehnten Inhalte der Videosequenz 1* Zugang zum Bewusstsein des Betrachters gewinnen. Die Videosequenzen 2*, welche die Emotionen des Betrachters ansprechen, dienen somit als Schlüssel für die Aufmerksamkeit des Betrachters.

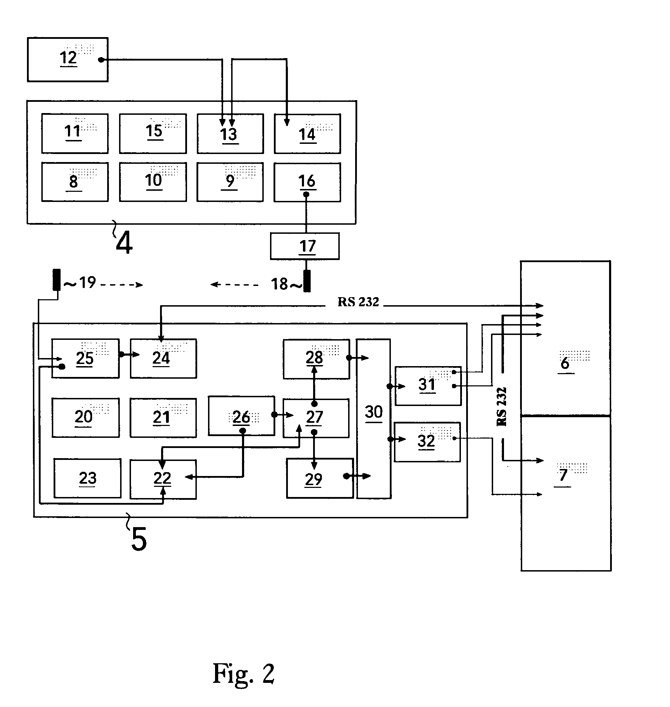

Fig. 2 zeigt Blockschaltbilder eines Servers 4 und einer Zuspielbox 5, welche einen ersten Bildschirm 6 und einen zweiten Bildschirm 7 ansteuert.

Der Server 4 umfasst eine Spannungsversorgung 8, eine Prozessoreinheit 9 mit zugehörigem RAM-Arbeitsspeicher, eine Festplatte 10, eine grafische Benutzeroberfläche 11. Der Server 4 ist für Datenempfang 12 über Internet/DSL ausgelegt und umfasst ein DSL Modem 13 mit Router sowie eine Ethernet-Schnittstelle 14. Über diese Internetanbindung können enkodierte Videodatenströme und andere Daten auf die Festplatte 10 des Servers 4 überspielt werden. Darüber hinaus umfasst der Server 4 eine Überwachungseinheit 15 ("Watchdog"), welche bei einer Instabilität oder einem Ausfall einen Neustart des Servers 4 erzwingt. Beispielsweise könnte der Server 4 aufgrund äußerer Störungseinflusse instabil werden, beispielsweise aufgrund von Spannungsspitzen am Stromnetz. In diesen Fällen kann ein Systemneustart die Folgen der Fehler beheben.

Der Datenaustausch zwischen dem Server 4 und der Zuspielbox 5 erfolgt über eine Funkschnittstelle, beispielsweise über eine Funkschnittstelle entsprechend dem Standard Wireless LAN. Der Server 4 umfasst eine Wireless LAN Sende-/Empfangseinheit 16 und dient als Wireless LAN Zugriffspunkt 17 für eine oder mehrere Zuspielboxen. Über Antennen 18, 19 können Daten zwischen dem Server 4 und der Zuspielbox 5 ausgetauscht werden.

Die Zuspielbox 5 ist ein vollwertiges Computersystem und umfasst eine Spannungsversorgung 20, eine Prozessoreinheit 21 mit zugehörigem RAM-Arbeitsspeicher, eine Festplatte 22, eine Überwachungseinheit 23 ("Watchdog") und eine serielle Schnittstelle 24. Auch die Zuspielbox 5 ist mit einer Wireless LAN Sende-/Empfangseinheit 25 ausgestattet. Enkodierte Videodatenströme, die über Wireless LAN vom Server 4 zur Wireless LAN Sende-/Empfangseinheit 25 der Zuspielbox 5 übertragen werden, werden auf der Festplatte 22 abgelegt. Zur weiteren Verarbeitung der vorzugsweise entsprechend dem Standard MPEG-2 enkodierten Videodatenströme umfasst die Zuspielbox 5 einen MPEG-2 Dekoder 26, einen Zweifach-Videoprozessor 27, einen ersten Grafikprozessor 28, einen zweiten Grafikprozessor 29 und eine SYNC-Dämpfungseinheit 30.

In dem enkodierten Videodatenstrom sind sowohl die Bilder der ersten Videosequenz 1* als auch die Bilder der zweiten Videosequenz 2* enthalten. Um eine absolute Synchronizität der beiden Videosequenzen sicherzustellen, werden bei der Erzeugung des Videodatenstroms jeweils die ersten 15 Bilder der Videosequenz 1*, dann die ersten 15 Bilder von Videosequenz 2*, dann wieder die nächsten 15 Bilder von Videosequenz 1* usw. gleich einem Reißverschlussverfahren miteinander verwoben. Der so erzeugte Videodatenstrom wird dann mit den weiteren notwendigen Informationen im MPEG-2 Verfahren mit 15 Bildern je Gruppe (15 GoP) enkodiert. Wegen der durch das MPEG-2 Verfahren bewirkten Datenkompression wird ein enkodierter Videodatenstrom erhalten, dessen Größe sehr viel geringer ist als die Größe des ursprünglichen Videodatenstroms. Daher kann der enkodierte Videodatenstrom ohne Probleme über DSL oder Satellit zum Server 4 und vom Server 4 über Wireless LAN zur Zuspielbox 5 übertragen werden. Auf Seiten der Zuspielbox 5 werden die enkodierten Videodatenströme auf der Festplatte 22 gespeichert.

Der MPEG-2 Dekoder 26 greift auf die Festplatte 22 zu, dekodiert den dort gespeicherten enkodierten Videodatenstrom und erzeugt daraus einen dekodierten Videodatenstrom, der wiederum auf der Festplatte 22 abgelegt wird. Falls der enkodierte Videodatenstrom Audiodaten enthält, werden diese zusammen mit den Videodaten dekodiert. Zu einem beliebigen späteren Zeitpunkt kann der Zweifach-Videoprozessor 27 auf die Festplatte 22 zugreifen, den dekodierten Videodatenstrom auslesen und aus den aufeinanderfolgenden Gruppen von jeweils 15 Bildern die ursprüngliche erste Videosequenz 1* und die ursprüngliche zweite Videosequenz 2* regenerieren. Im Gegensatz zu einem normalen Splittscreenverfahren hat das hier eingesetzte Verfahren den Vorteil, dass alle Bilder zu Gunsten höchster Qualität am Ende wieder in der vollen Auflösung absolut synchron gezeigt werden können.

Die erste Videosequenz 1* wird dem ersten Grafikprozessor 28 zugeführt, der daraus erste XVGA-Videosignale für den ersten Bildschirm 6 erzeugt. Entsprechend wird die zweite Videosequenz 2* dem zweiten Grafikprozessor 29 zugeführt, der zweite XVGA-Videosignale für den zweiten Bildschirm 7 generiert. Die SYNC-Signale beider Videokanäle werden durch die SYNC-Dämpfungseinheit 30 gedämpft. Bei dieser Dämpfung handelt es sich um eine resistive Amplitudenerniedrigung der SYNC-Signale beider Videokanäle. Die Reduzierung der SYNC-Amplitude und damit auch der Flankensteilheit verhindert ein Übersprechen der SYNC-Signale. Dadurch kann die Ausbildung vertikaler Streifen auf den beiden Bildschirmen verhindert werden. Der erste Bildschirm 6 wird durch erste Videosignale 31 angesteuert, während der zweite Bildschirm 7 durch zweite Videosignale 32 angesteuert wird. Über ihren jeweiligen Grafikprozessor wird ein identischer Startimpuls für das jeweilige 1. Bild der ersten Videosequenz 1* und der zweiten Videosequenz 2* erzeugt. Die Einzelbilder der ersten Videosequenz 1* und der zweiten Videosequenz 2* sind jeweils mit einem definierten Nummerncode gekennzeichnet. Diese numerische Kennzeichnung wird während der PostProduktion und vor der Enkodierung des Videodatenstroms vorgenommen. Damit ist eine absolute Bildsynchronizität bei der Wiedergabe der ersten Videosequenz 1* auf dem ersten Bildschirm 6 und der zweiten Videosequenz 2* auf dem zweiten Bildschirm 7 gewährleistet.

Auf Seiten der Zuspielbox 5 kann es zu Ausfällen kommen, wenn beispielsweise ein enkodierter Videodatenstrom fehlerhaft ist, oder wenn das System aufgrund äußerer Störungseinflüsse instabil wird, zum Beispiel aufgrund extremer Spannungsspitzen am Stromnetz. In diesen Fällen kann nur ein durch die Überwachungseinheit 23 erzwungener Systemneustart die Folgen der Fehler beheben. Soweit die Fehlfunktion vom Betriebssystem oder der Software der Zuspielbox 5 noch erkannt werden kann, erfolgt eine Protokollierung. Zumindest wird jedoch jeder Systemneustart festgehalten. Darüber hinaus wird über die serielle Schnittstelle 24, bei der es sich beispielsweise um eine RS232 Schnittstelle handeln kann, eine systematische Erfassung von Fehlern vorgenommen.

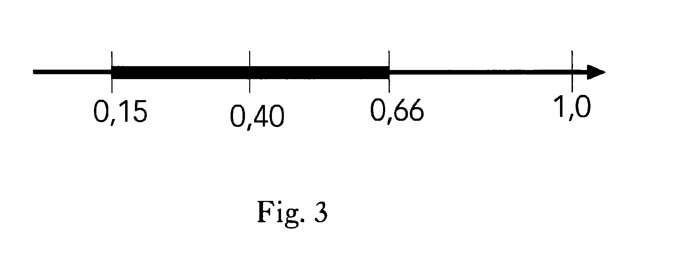

Die zweite Videosequenz 2* gibt die dargestellten Ereignisse gegenüber der natürlichen zeitlichen Abfolge verlangsamt wieder, um der komplexen emotionalen Erfassungsfähigkeit des Menschen Rechnung zu tragen. Die genaue Abstimmung des Faktors, durch den sich die zweite Videosequenz 2* von der ersten Videosequenz 1* in der Wiedergabegeschwindigkeit unterscheidet - zum Beispiel 0,4 zu 1 - erfolgt in der Postproduktion vor der Enkodierung. In Fig. 3 ist ein bevorzugter Bereich der Verlangsamung bei der Wiedergabe der zweiten Videosequenz gezeigt, der sich von 0,15 bis 0,66 erstreckt. Der Faktor, um den die zweite Videosequenz 2* die dargestellten Ereignisse gegenüber der natürlichen Abfolge verlangsamt, sollte bei geringen Bewegungsabläufen (z.B. Wolken) einen höheren Wert haben als bei höheren Bewegungsabläufen (z.B. Regen). Die Spannbreite kann zwischen 0,15 und 0,66, sollte aber insbesondere um 0,4 liegen. Diese Werte sind wichtig, da sie bereits bei der Rohproduktion des Filmmaterials berücksichtigt werden müssen. Um für die zweite Videosequenz 2* eine ausreichende Zahl von Einzelbildern zur Verfügung zu haben, sollte die zweite Videosequenz 2* mit einer um einen Faktor 1,5 bis 6,66 höheren Aufnahmebildrate aufgezeichnet werden.

Hintergrund der Erfindung sind neue Erkenntnisse aus der Hirnforschung. Sind wir bis vor kurzem noch davon ausgegangen, dass das Kronjuwel der Schöpfung der kühle Verstand sei, so wissen wir heute, dass die eigentliche Entscheidungsgröße von den Emotionen gestellt wird. Jede Entscheidung, jede kritische Situation wird in letzter Instanz von unseren Gefühlen abgesegnet. Sorgen und Nöte, Wut, Angst und Begehrlichkeit waren bis vor kurzem noch Begriffe, die bei einer Aufarbeitung ausschließlich in das Arbeitsfeld der Psychologen fielen. Es gab keine anderen Erklärungsmodelle, weil der Bereich der Psyche lange von der Forschung vernachlässigt worden war - man wusste einfach nicht, wie man ihn untersuchen sollte. Auf Grund neuer technologischer Untersuchungsmöglichkeiten des Gehirns änderte sich das in den vergangenen Jahren. Anders als die konventionellen Psychologen beschäftigen sich die Neurobiologen mit der konkreten Anatomie des Organs. Sie gelangten zu einer neuen Sicht und damit zu einer neuen Bewertung der Emotionen.

Eine Erkenntnis der modernen Hirnforschung ist, dass ohne Emotionen nichts gelingt. So sind unsere Emotionen z.B. auch das "Benzin" für das Funktionieren der Intuition: sie motivieren die Großhirnrinde (der Arbeitsplatz des kognitiven Bereichs) zu ihrer Arbeit und bewirken das Einschalten des Bewusstseins, wenn dieses auf ein sinnvolles Angebot gestoßen ist.

Die bahnbrechende Kernaussage der Wissenschaft ist dabei, dass alle menschlichen Entscheidungen Gefühlsentscheidungen sind. Der Verstand ist lediglich ein Berater, der Vorschläge macht. Das limbische System als u.a. emotionales Entscheidungszentrum (sozusagen der Vorstandsvorsitzende) stimmt nur solchen Entscheidungen zu, die im Licht der bisherigen Lebenserfahrung akzeptabel sind - wobei die momentane Affektlage wesentlich beteiligt ist.

Das limbische System ist eine Funktionseinheit des Gehirns, das der Verarbeitung von Emotionen und der Entstehung von Triebverhalten dient.
Es stellt ein Verbund aus Arealen dar, die überwiegend im zentralen Bereich des Hirns sitzen. Diese unbewusste Chefinstanz steuert oder beeinflusst auch Gedanken, Erinnerungen, Motivation.

Ein wesentlicher Bestandteil für die Funktionsweise der Erfindung ist die Nutzung dieser hirnphysiologischen Erkenntnisse.

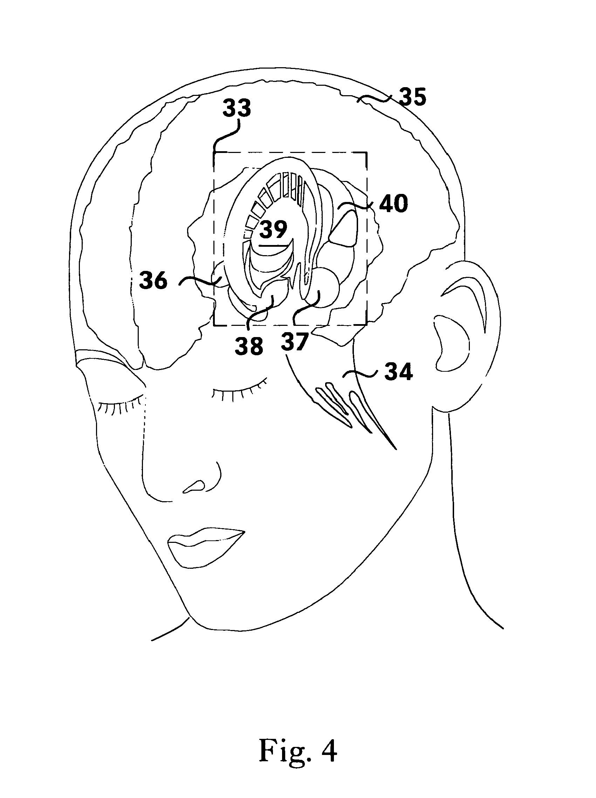

Figur 4 zeigt eine Auswahl der zum limbischen System 33 gehörenden Strukturen. Die einzelnen Areale besitzen zum Teil noch wichtige andere Funktionen, die nicht dem limbischen System zugeordnet werden können. Außerdem üben andere und nicht-kortikale Strukturen des Gehirns einen enormen Einfluss auf das limbische System 33 aus. Somit muss die Entstehung von emotionalen Erregungen und Triebverhalten immer als Zusammenspiel vieler Gehirnanteile gesehen werden und darf nicht dem limbischen System 33 allein zugesprochen werden.

Vom Hirnstamm 34 ganz unten über das mitten im Gehirn liegende limbische System 33 bis zu Teilen der vorderen Großhirnrinde 35 liegen die Areale, in denen Emotionen ausgelöst werden.

Vereinfacht dargestellt: Was die Sinnesorgane an bestimmte Regionen der Großhirnrinde 35 senden, wird - je nach betroffener Körperseite - an die rechte Amygdala 36 oder die linke Amygdala 37 weitergeleitet, dort auf seine "emotionale Bedeutung" geprüft und entsprechend dem Ergebnis emotional "eingefärbt". Diese Programmierung löst in den beteiligten Vorderhirnteilen, dem Hypothalamus 38 und Neuronenzentren des Hirnstamms 34, die eigentlichen Emotionen aus, die an den Thalamus 39 weitergeleitet werden. Hier wird dann auf Grund der emotionalen Intensität entschieden, ob eine Weiterleitung an den Hippocampus 40 erfolgt oder die Signalreize wegen mangelhafter Bedeutung verworfen werden.

Die Amygdala (Mandelkern, Corpus amygdaloideum) 36, 37 ist eine Struktur des Gehirns und befindet sich im medialen Teil des Temporallappens. Sie gehört zum limbischen System 33 und ist für die emotionale Färbung von Informationen zuständig. Ausfälle der Amygdala führen beim Menschen zu Gedächtnisstörungen.

Der Hypothalamus 38 stellt ein Steuerzentrum der vegetativen Funktionen sowie des affektiven Verhaltens (Reaktionsverhalten) dar. Außerdem ist er der Sekretionsort verschiedener übergeordneter Hormone, die regelnd auf die Hypophyse wirken. Entsprechend kann der Hypothalamus 38 auch als zentrales Bindeglied zwischen dem Nervensystem und dem Hormonsystem betrachtet werden.

Zu den vom Hypothalamus 38 überwachten und regulierten Körperfunktionen gehören unter anderem die Überwachung der hormonellen Ausstattung im Körperkreislauf und im Magen-Darm-Trakt sowie der Blasenfunktion durch Hormonrezeptoren sowie das Generieren emotionaler Erregungen wie z.B. Wut, Aggression, Begeisterung etc.

Der Thalamus 39 bildet den größten Teil des Hirnstamms 34. Er setzt sich aus vielen Kerngebieten zusammen, die eine besonders starke Verbindung zur gesamten Großhirnrinde 35 aufweisen. Um sich der sensibel-sensorischen Informationen bewusst zu werden, müssen die aufsteigenden Bahnen auf ihrem mationen bewusst zu werden, müssen die aufsteigenden Bahnen auf ihrem Weg zum Hippocampus 40 vorher im Thalamus 39 verschaltet werden. Er wird deshalb auch als "Tor zum Bewusstsein" bezeichnet.

Der Hippocampus 40, auch Ammonshorn genannt, ist eine zentrale Schaltstelle innerhalb des limbischen Systems 33 und zuständig für die dynamische assoziative Verknüpfung von Erlebnisinhalten. In ihm fließen Informationen verschiedener sensorischer Systeme zusammen, die mit bereits gespeicherten Informationen abgeglichen, verarbeitet und von dort zur Großhirnrinde 35 zurückgesandt werden. Damit ist er eminent wichtig für die Gedächtniskonsolidierung, also für die Überführung von Gedächtnisinhalten aus dem Kurzzeit- in das Langzeitgedächtnis. Der Hippocampus 40 wird somit als Struktur gesehen, die Erinnerungen generiert, während die dazu passenden Gedächtnisinhalte an verschiedenen anderen Stellen der Großhirnrinde 35 gespeichert werden.

Alle physiologischen Theorien der Aufmerksamkeit gehen von einer limitierten Aufmerksamkeitskapazität aus. Ein Großteil der Informationsverarbeitung läuft vorbewusst ab. Man spricht hier von subliminaler Wahrnehmung - nur ein Bruchteil der ankommenden Reize wird bewusst.

Die Reizaufnahme, die Kodierung des Reizes, die Musterextraktion und der Vergleich des gegenwärtigen Reizmusters mit Reizmustern im Langzeitgedächtnis sind ebenso wenig bewusst, wie die Auswahl und Ausführung der auf den Reiz passenden Reaktion und die Rückmeldung des Reaktionserfolgs aus der Peripherie.

Die Verarbeitung visueller Reize stellt dabei sich im Einzelnen wie folgt dar: Die Augen sind ständig auf der Suche nach Reizvollem. Die aufgenommenen Bilder werden in neuronale Signale transformiert. Diese Signale werden dann im visuellen System in Verbindung mit Informationen anderer Sinne an die verschiedenen Areale im menschlichen Gehirn weitergeleitet und verarbeitet.

Zur Überprüfung seiner emotionalen Relevanz wird jeder visuelle Reiz zuerst dem limbischen System 33 zugeführt und dort zuerst an die rechte Amygdala 36 oder die linke Amygdala 37 gesendet, um die individuelle emotionale Bedeutung des visuellen Reizes zu ermitteln. Gemäß dem Ergebnis dieser Prüfung werden die entsprechenden Reize intensiver oder weniger intensiv positiv oder negativ eingefärbt. Diese Programmierung durch die Amygdala 36, 37 löst im Hypothalamus 38 erst die eigentliche Emotion aus. Um sich nun der sensibel-sensorischen Informationen bewusst zu werden, müssen die generierten Impulse zusammen mit dem durch den Hypothalamus 38 angelieferten Status im Thalamus 39 mit den restlichen Impulsen aus anderen Arealen verschaltet werden. Dadurch können sie auf ihrem Weg über den Hippocampus 40 zur Großhirnrinde 35 die volle Aufmerksamkeit aktivieren. Unterstützt wird dieser Prozess von spezifischen Thalamuskernen, die mit klar abgrenzbaren Bereichen der Großhirnrinde (Neokortex) verbunden sind. Reichen die vom Hypothalamus 38 übernommenen Reize auf Grund mangelhafter Einfärbung durch die Amygdala 36, 37 nicht aus, erfolgt keine Verschaltung durch den Thalamus 39.

Zur Aufrechterhaltung unseres individuellen Wohlbefindens profitieren wir täglich von dieser Sortierfähigkeit des Thalamus. Denn unser technologischer Fortschritt bedeutet nicht nur, dass wir auf immer mehr Informationen zugreifen können. Es wird auch auf uns zugegriffen - Informationen, Botschaften nutzten jede Chance, um unsere Beachtung zu bekommen. Weil sich zu viele um sie bemühen, ist unsere Aufmerksamkeit zu einer seltenen "Ware" geworden.

Immer mehr Produkte "verursachen" immer mehr Informationen. Unsere Beachtung steigert sich nicht. Die Industrie reagiert mit einer höheren Informationsdichte, der Verbraucher mit höherer Ignoranz. Das Investieren in diesen Teufelskreis zeigt, dass bis heute keine Möglichkeit für eine bessere Ansprache gefunden worden ist.

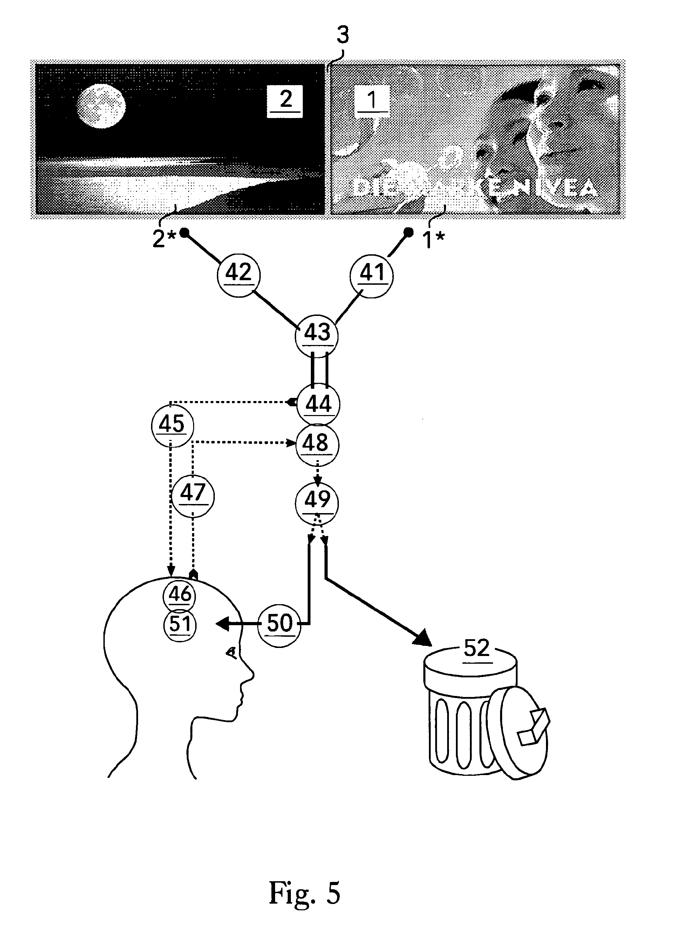

In Fig. 5 ist die Reizverarbeitung der auf dem rechten Bildschirm 1 wiedergegebenen Videosequenz 1* und der auf dem linken Bildschirm 2 gezeigten Videosequenz 2* entsprechend diesen hirnphysiologischen Erkenntnissen schematisch dargestellt. Während die erste Videosequenz 1* eine normale Botschaft 41 transportiert, liefert die zweite Videosequenz 2* visuelle Assoziationen 42 zur Aktivierung emotionaler Erinnerungen. Der normalen Botschaft 41 werden emotionale Erinnerungen zur Seite gestellt. Die gesamte assoziative Botschaft 43 wird vom limbischen System 44 auf emotionale Relevanz geprüft. Hierzu wird eine Abfrage 45 der emotionalen Erinnerung an die Amygdala 46 gerichtet. Die Amygdala 46 liefert als Antwort 47 eine mit der visuellen Assoziation 42 verknüpfte emotionale Erinnerung an den Hypothalamus 48. Die ursprünglich uninteressante Botschaft bekommt jetzt mit Hilfe der Amygdala 46 eine positive emotionale Einfärbung.

Der Hypothalamus 48 übernimmt diese Programmierung, um nunmehr die eigentlichen Emotionen auszulösen. Diese werden dann vom Thalamus 49 mit den restlichen sensorischen Reizen verschaltet und über den Hippocampus 50 der Aufmerksamkeit 51 zur Verfügung gestellt. Eine Botschaft ohne emotionale Relevanz würde dagegen verworfen werden (52).

Ein wesentlicher Bestandteil für die Funktionsweise des erfindungsgemäßen Verfahrens bzw. Präsentationssystems ist die Idee, bildhafte Darstellungen emotionaler Grundmuster mit Hilfe wichtiger Funktionen des limbischen Systems als Auslöser für eine erhöhte Wahrnehmungsbereitschaft zu nutzen. Sie bietet den Betrachtern die Möglichkeit, sich mit den unterschiedlichsten Inhalten zu identifizieren, ohne dass der Absender etwas über die Vorlieben, Wünsche und Gefühle der einzelnen Betrachter weiß.

Die Anwendungsgebiete der Erfindung sind äußerst vielfältig. Beispielhaft werden nachfolgend drei mögliche Anwendungen kurz beschrieben, wobei die Anwendung jedoch nicht auf diese Gebiete beschränkt ist.

Das erfindungsgemäße Verfahren bzw. Präsentationssystem kann insbesondere im pädagogischen Bereich, beispielsweise zur Verbesserung von Lernen eingesetzt werden. Durch die Möglichkeit, kognitive Lerninhalte zeitgleich mit Hilfe emotionaler Bildsequenzen zu stabilisieren, wird es möglich, über eine derart erhöhte Aufmerksamkeit eine bessere Verankerung im Langzeitgedächtnis zu erreichen. Besonders bei Legasthenikern bietet sich das erfindungsgemäße Verfahren als pädagogisches Mittel zu Verbesserung der Lernfähigkeit an.

Legasthenie ist eine partielle Lese- und Schreibschwäche, die eine ihrer Ursache in einer mangelhaften Koordinationsiahigkeit der beiden Gehirnhälften hat. Digitale, kognitive Informationen (linke Hirnhälfte) und analoge, bildhafte Informationen (rechte Hirnhälfte) werden wesentlich über den Corpus Callosum koordiniert. Diese Koordinationsfähigkeit ist bei Legasthenikern häufig nicht ausreichend ausgeprägt und führt in solchen Fällen deshalb zu einer partiellen Benachteiligung bei bestimmten Lernprozessen. Mit Hilfe der Erfindung kann dieser Effekt erheblich abgemildert werden.

Naheliegend ist auch die Anwendung im Bereich der kommerziellen Kommunikation, insbesondere in der Werbung, die sowohl am "Point of Sale" - also in Supermärkten, Einkaufshallen, Verkaufsräumen, Präsentationsräumen, etc. - als auch am "Point of Waiting" - Kassensituation, Postfilialen, Reisezentren, in öffentlichen Verkehrsmitteln und an den Haltestellen, Flughäfen, etc. - stattfinden kann.

Eine weitere Anwendungsmöglichkeit stellt das sogenannte E-Learning und das Distance-Learning dar. Beim E-Learning werden dem Lernenden die Lerninhalte über elektronische Medien vermittelt, beim Distance-Learning kommt hinzu, dass zwischen dem Lernenden und dem Lehrenden ein räumlicher Abstand zu überwinden ist. Die Erfindung ermöglicht es auch hier durch eine geeignete Ausgestaltung der Lerninhalte sowie deren Übermittlung, die Aufmerksamkeit des die Information Aufnehmenden zu erhalten und ein Abwenden von den Lerninhalten zu vermeiden.

Soll die Konzentrationsfähigkeit eines Lernenden weiter erhöht werden, können - bei Erhaltung aller anderen Merkmale der Erfindung - der erste Bildschirm und der zweite Bildschirm auch in einem geschlossenen Raum angeordnet sein, der den Lernenden nach außen vor ablenkenden Sinneseinflüssen abschottet.

## Patentansprüche

1. Präsentationssystem zur Wiedergabe von Videosequenzen auf zwei Bildschirmen, welches aufweist:
- einen ersten Bildschirm (1,6) zur Wiedergabe einer ersten Videosequenz (1*) und einen zweiten Bildschirm (2, 7) zur Wiedergabe einer zweiten Videosequenz (2*),
- eine Dekodiereinheit (26) zur Dekodierung mindestens eines enkodierten Videodatenstroms und zum Erzeugen mindestens eines dekodierten Videodatenstroms,
- eine Videoprozessoreinheit zum Extrahieren einer ersten Videosequenz (1*) mit einer Folge von ersten Einzelbildern und einer zweiten Videosequenz (2*) mit einer Folge von zweiten Einzelbildern aus dem mindestens einen dekodierten Videodatenstrom, und zum Erzeugen von ersten Videosignalen (31) für den ersten Bildschirm (1, 6) und von zweiten Videosignalen (32) für den zweiten Bildschirm (2, 7), wobei die Videoprozessoreinheit dazu ausgelegt ist, die ersten Einzelbilder der ersten Videosequenz (1*) auf dem ersten Bildschirm (1, 6) bildweise synchron mit den zweiten Einzelbildern der zweiten Videosequenz (2*) auf dem zweiten Bildschirm (2, 7) wiederzugeben;
- wobei das Verhältnis von Aufnahmebildrate zu Wiedergabebildrate bei der zweiten Videosequenz (2*) höher ist als bei der ersten Videosequenz (1*), wodurch die zweite Videosequenz (2*) gegenüber der ersten Videosequenz (1*) in Zeitlupe dargestellt wird.

2. Präsentationssystem nach Anspruch 1, **dadurch gekennzeichnet, dass** die zweite Videosequenz dargestellte Ereignisse gegenüber der natürlichen zeitlichen Abfolge verlangsamt in Zeitlupe wiedergibt, wobei der Faktor, um den die zweite Videosequenz die dargestellten Ereignisse gegenüber der natürlichen Abfolge verlangsamt darstellt, zwischen 0,15 und 0,66 liegt.

3. Präsentationssystem nach Anspruch 1 oder Anspruch 2, **dadurch gekennzeichnet, dass** die zweite Videosequenz mit einer gegenüber der Wiedergabebildrate erhöhten Aufnahmebildrate aufgezeichnet wurde, wodurch die Wiedergabe der zweiten Videosequenz auf dem zweiten Bildschirm verlangsamt in Zeitlupe erfolgt.

4. Präsentationssystem nach einem der vorhergehenden Ansprüche, **dadurch gekennzeichnet, dass** die zweite Videosequenz mit einer um den Faktor 1,5 bis 6,66 höheren Aufnahmebildrate aufgezeichnet wurde als die erste Videosequenz, wodurch sich bei bildsynchroner Wiedergabe der ersten und der zweiten Videosequenz eine gegenüber der ersten Videosequenz auf das 0,15-fache bis 0,66-fache verlangsamte Wiedergabe der zweiten Videosequenz ergibt.

5. Präsentationssystem nach einem der vorhergehenden Ansprüche, **dadurch gekennzeichnet, dass** die Aufnahmebildrate, mit der die Einzelbilder der ersten Videosequenz aufgezeichnet wurden, gleich ist zur Wiedergabebildrate der ersten Videosequenz, und wobei die Aufnahmebildrate, mit der die Einzelbilder der zweiten Videosequenz aufgezeichnet wurden, höher ist als die Wiedergabebildrate der zweiten Videosequenz.

6. Präsentationssystem nach einem der vorhergehenden Ansprüche, **dadurch gekennzeichnet, dass** es sich bei der Dekodiereinheit um eine MPEG2-Dekodiereinheit handelt, welche dazu ausgelegt ist, einen enkodierten MPEG2-Datenstrom in einen dekodierten Videodatenstrom umzuwandeln.

7. Präsentationssystem nach einem der vorhergehenden Ansprüche, **dadurch gekennzeichnet, dass** die Videoprozessoreinheit umfasst:
- einen Zweifach-Videoprozessor zum Extrahieren der ersten und der zweiten Videosequenz aus dem dekodierten Videodatenstrom;
- einen ersten Grafikprozessor, der die erste Videosequenz in erste Videosignale zur Ansteuerung des ersten Bildschirms umwandelt;
- einen zweiten Grafikprozessor, der die zweite Videosequenz in zweite Videosignale zur Ansteuerung des zweiten Bildschirms umwandelt.

8. Präsentationssystem nach einem der vorhergehenden Ansprüche, **dadurch gekennzeichnet, dass** der Videoprozessoreinheit ein Synchronisationssignal zugeführt wird, welches eine bildsynchrone Wiedergabe der Einzelbilder der ersten und der zweiten Videosequenz bewirkt.

9. Präsentationssystem nach einem der vorhergehenden Ansprüche, **dadurch gekennzeichnet, dass** das Präsentationssystem eine Dämpfungseinheit für ein Synchronisationssignal umfasst.

10. Präsentationssystem nach einem der vorhergehenden Ansprüche, **dadurch gekennzeichnet, dass** die Einzelbilder der ersten und der zweiten Videosequenz einander entsprechende Zeitcodes aufweisen, wobei die Videoprozessoreinheit dazu ausgelegt ist, anhand dieser Zeitcodes die erste Videosequenz und die zweite Videosequenz zu synchronisieren.

11. Präsentationssystem nach einem der vorhergehenden Ansprüche, **dadurch gekennzeichnet, dass** die Videoprozessoreinheit dazu ausgelegt ist, die Wiedergabe der ersten Videosequenz und die Wiedergabe der zweiten Videosequenz dergestalt zu synchronisieren, dass die Wiedergabe im Wesentlichen zeitgleich beginnt und endet, wobei die Zeitpunkte des Wiedergabebeginns bzw. des Wiedergabeendes der Videosequenzen zeitlich jeweils weniger als 40 ms, vorzugsweise weniger als 33 ms auseinanderliegen.

12. Präsentationssystem nach einem der vorhergehenden Ansprüche, **gekennzeichnet durch** mindestens eines der folgenden Merkmale:
- der erste Bildschirm ist neben dem zweiten Bildschirm angeordnet;
- der erste Bildschirm ist rechts von dem zweiten Bildschirm angeordnet;
- der erste Bildschirm und der zweite Bildschirm weisen die gleiche Größe auf;
- der erste und der zweite Bildschirm sind so nebeneinander angeordnet, dass sie sich zusammen im Blickwinkelbereich eines Betrachters befinden und von mehreren Betrachtern gleichzeitig betrachtet werden können;
- der erste Bildschirm und der zweite Bildschirm sind rechteckig, wobei das Seitenverhältnis von Breitseite zur Hochseite der Bildschirm 4:3 oder 16:9 entspricht;
- der erste Bildschirm und der zweite Bildschirm weisen eine Flächendiagonale von mindestens 17 Zoll, vorzugsweise von 50 bis 70 Zoll auf;
- bei dem ersten und dem zweiten Bildschirm handelt es sich um Flachbildschirme.

13. Präsentationssystem nach einem der vorhergehenden Ansprüche, **gekennzeichnet durch** mindestens eines der folgenden Merkmale:
- zwischen dem ersten und dem zweiten Bildschirm ist ein nicht bildgebender, neutraler Trennbereich angeordnet;
- der erste Bildschirm und der zweite Bildschirm überlappen einander nicht und umgeben einander nicht;
- die Bildschirme sind nebeneinander und auf gleicher Höhe angeordnet und der neutrale Trennbereich verläuft vertikal zwischen den Bildschirmen;
- der **durch** den neutralen Trennbereich zwischen dem ersten Bildschirm und dem zweiten Bildschirm gebildete Abstand beträgt etwa 1/50 bis 1/2 des Abstandes der Mittelpunkte der beiden Bildschirme voneinander;
- der erste Bildschirm und der zweite Bildschirm sind derart angeordnet, dass sie von einem neutralen Umgebungsbereich umgeben sind, wobei der Umgebungsbereich die Bildschirme zu allen Seiten hin vorzugsweise um mindestens die Hälfte der Breite der Bildschirme überragt.

14. Präsentationssystem nach einem der vorhergehenden Ansprüche, **dadurch gekennzeichnet, dass** die erste Videosequenz aus instruktiven ersten Bildern besteht, welche auf Grund ihrer logischen Struktur die einem Betrachter zu vermittelnden Informationen enthalten.

15. Präsentationssystem nach einem der vorhergehenden Ansprüche, **dadurch gekennzeichnet, dass** die zweite Videosequenz zweite Bilder mit rein assoziativer Wirkung zeigt, um bildhafte Verknüpfungen mit emotionalen Erinnerungen zu aktivieren.

16. Präsentationssystem nach einem der vorhergehenden Ansprüche, **dadurch gekennzeichnet, dass** die Wiedergabe der zweiten Videosequenz und/oder die der ersten Videosequenz ohne Tonwiedergabe erfolgt.

17. Präsentationssystem nach einem der vorhergehenden Ansprüche, **dadurch gekennzeichnet, dass** die Wiedergabe der zweiten Videosequenz und die der ersten Videosequenz im gleichen Farbspektrum erfolgt.

18. Verwendung eines Präsentationssystems nach einem der Ansprüche 1 bis 17 zur Wiedergabe einer ersten Videosequenz (1*) auf dem ersten Bildschirm (1, 6) und einer zweiten Videosequenz (2*) auf dem zweiten Bildschirm (2, 7), wobei das Verhältnis von Aufnahmebildrate zu Wiedergabebildrate bei der zweiten Videosequenz (2*) höher ist als bei der ersten Videosequenz (1*), wodurch die zweite Videosequenz (2*) gegenüber der ersten Videosequenz (1*) in Zeitlupe dargestellt wird.

19. Verwendung nach Anspruch 18, **dadurch gekennzeichnet, dass** die zweite Videosequenz dargestellte Ereignisse gegenüber der natürlichen zeitlichen Abfolge verlangsamt wiedergibt, wobei der Faktor, um den die zweite Videosequenz die dargestellten Ereignisse gegenüber der natürlichen Abfolge verlangsamt darstellt, zwischen 0,15 und 0,66 liegt.

20. Verwendung nach Anspruch 18 oder Anspruch 19, **dadurch gekennzeichnet, dass** die zweite Videosequenz mit einer um den Faktor 1,5 bis 6,66 höheren Aufnahmebildrate aufgezeichnet wurde als die erste Videosequenz, wodurch sich bei bildsynchroner Wiedergabe der ersten und der zweiten Videosequenz eine gegenüber der ersten Videosequenz auf das 0,15-fache bis 0,66-fache verlangsamte Wiedergabe der zweiten Videosequenz ergibt.

21. Verwendung nach einem der Ansprüche 18 bis 20, **dadurch gekennzeichnet, dass** die Aufnahmebildrate, mit der die Einzelbilder der ersten Videosequenz aufgezeichnet wurden, gleich ist zur Wiedergabebildrate der ersten Videosequenz, und wobei die Aufnahmebildrate, mit der die Einzelbilder der zweiten Videosequenz aufgezeichnet wurden, höher ist als die Wiedergabebildrate der zweiten Videosequenz.

22. Verwendung nach einem der Ansprüche 18 bis 21, **dadurch gekennzeichnet, dass** der dekodierte Videodatenstrom jeweils abwechselnd eine erste Anzahl von Einzelbildern der ersten Videosequenz und eine zweite Anzahl von Einzelbildern der zweiten Videosequenz umfasst.

23. Verfahren zur Wiedergabe von Videosequenzen auf zwei Bildschirmen, welches folgende Schritte umfasst:
- Dekodieren mindestens eines enkodierten Videodatenstroms und Erzeugen mindestens eines dekodierten Videodatenstroms;
- Extrahieren einer ersten Videosequenz (1*) und einer zweiten Videosequenz (2*) aus dem mindestens einen dekodierten Videodatenstrom und Erzeugen von ersten Videosignalen (31) aus der ersten Videosequenz (1*) und von zweiten Videosignalen (32) aus der zweiten Videosequenz (2*),
- Wiedergeben der ersten Videosequenz (1*) auf dem ersten Bildschirm (1, 6) und der zweiten Videosequenz (2*) auf dem zweiten Bildschirm (2, 7), wobei die Einzelbilder der ersten Videosequenz (1*) bildweise synchron mit den Einzelbildern Aufnahmebildrate zu Wiedergabebildrate bei der zweiten Videosequenz (2*) höher ist als bei der ersten Videosequenz (1*), wodurch die zweite Videosequenz (2*) gegenüber der ersten Videosequenz (1*) in Zeitlupe dargestellt wird.

24. Verfahren nach Anspruch 23, **dadurch gekennzeichnet, dass** die zweite Videosequenz dargestellte Ereignisse gegenüber der natürlichen zeitlichen Abfolge verlangsamt wiedergibt, wobei der Faktor, um den die zweite Videosequenz die dargestellten Ereignisse gegenüber der natürlichen Abfolge verlangsamt darstellt, zwischen 0,15 und 0,66 liegt.

25. Verfahren nach Anspruch 23 oder Anspruch 24, **dadurch gekennzeichnet, dass** die zweite Videosequenz mit einer um den Faktor 1,5 bis 6,66 höheren Aufnahmebildrate aufgezeichnet wurde als die erste Videosequenz, wodurch sich bei bildsynchroner Wiedergabe der ersten und der zweiten Videosequenz eine gegenüber der ersten Videosequenz auf das 0,15-fache bis 0,66-fache verlangsamte Wiedergabe der zweiten Videosequenz ergibt.

26. Verfahren nach einem der Ansprüche 23 bis 25, **dadurch gekennzeichnet, dass** die Aufnahmebildrate, mit der die Einzelbilder der ersten Videosequenz aufgezeichnet wurden, gleich ist zur Wiedergabebildrate der ersten Videosequenz, und wobei die Aufnahmebildrate, mit der die Einzelbilder der zweiten Videosequenz aufgezeichnet wurden, höher ist als die Wiedergabebildrate der zweiten Videosequenz.

27. Verfahren nach einem der Ansprüche 23 bis 26, **dadurch gekennzeichnet, dass** der Schritt des Extrahierens umfasst:
- Zuweisen einer vorbestimmten ersten Anzahl von Einzelbildern des dekodierten Videodatenstroms zur ersten Videosequenz,
- Zuweisen einer darauffolgenden zweiten Anzahl von Einzelbildern des dekodierten Videodatenstroms zur zweiten Videosequenz,
- Wiederholen der beiden vorhergehenden Schritte.

28. Verfahren nach einem der Ansprüche 23 bis 27, **gekennzeichnet durch** folgenden Schritt:
- Synchronisieren der Wiedergabe der ersten Videosequenz und der zweiten Videosequenz dergestalt, das die Wiedergabe zeitgleich beginnt und endet, wobei die Zeitpunkte des Wiedergabebeginns bzw. des Wiedergabeendes der Videosequenzen zeitlich jeweils weniger als 40 ms, vorzugsweise weniger als 33 ms auseinanderliegen.
